# EUROPÄISCHE PATENTSCHRIFT

(11) **EP 0 481 343 B1**
(45) Veröffentlichungstag und Bekanntmachung des Hinweises auf die Patenterteilung: **26.06.1996**
(21) Anmeldenummer: 91117219.5
(22) Anmeldetag: 09.10.1991
(51) Int. Cl.: B29C 55/12, B29C 59/10

(54) **Verfahren zur Herstellung von Folienbahnen von geringer Dicke**
Method for the manufacture of films of small thickness
Procédé pour la fabrication de films d'une épaisseur mince

(30) Priorität: 17.10.1990 DE 4032907
(43) Veröffentlichungstag der Anmeldung: 22.04.1992
(73) Patentinhaber: HOECHST AKTIENGESELLSCHAFT, D-65926 Frankfurt am Main (DE)
(72) Erfinder: Crass, Günther, W-6204 Taunusstein 4 (DE)

(56) Entgegenhaltungen:
- DD-A- 136 023
- DE-A- 1 504 813
- DE-A- 3 507 916
- US-A- 3 454 461
- PATENT ABSTRACTS OF JAPAN vol. 7, no. 250 (M-254)(1395) 8. November 1983 & JP-A-58 136 417 (TEIJIN) 13. August 1983
- PATENT ABSTRACTS OF JAPAN vol. 7, no. 20 (M-188)(1165) 26. Januar 1983 & JP-A-57 176 125 (SEKISUI KAGAKU KOGYO) 29. Oktober 1982

## Beschreibung

Die Erfindung betrifft ein Verfahren zur Herstellung biaxial gestreckter Folienbahnen aus thermoplastischem Kunststoff mit einer Dicke von weniger als 3 µm, bei dem wenigstens zwei Folienbahnen übereinanderliegend gemeinsam in Längs- und Querrichtung gestreckt werden.

Ultradünnstfolien mit einer Dicke von weniger als 3 µm, insbesondere weniger als 1 µm, werden zur Herstellung von Kondensatoren für die Mikroelektronik in immer stärkerem Ausmaß benötigt.

Die selbsttragende Herstellung derart dünner Folien bereitet aber in der Praxis außerordentliche Schwierigkeiten. In der Literatur werden deshalb verschiedene Verfahren beschrieben, die im wesentlichen darauf hinzielen, daß die Dünnstfolie gemeinsam mit einer bzw. auf einer Trägerfolie zunächst hergestellt und danach von der Trägerfolie abgezogen und aufgewickelt wird.

Die DE-A-17 04 764 beschreibt, wie Einzelfolien mittels Druck und/oder Wärme zur Haftung gebracht werden können. Nachteiligerweise kommt es dabei aber, wegen unvermeidbarer geringfügiger Dickenschwankungen der Einzelfolien, immer wieder zu Faltenbildungen, wobei die Falten durch das Laminierverfahren zusätzlich eingebügelt werden, was dazu führt, daß solche Folien für den bestimmungsgemäßen Einsatzzweck unbrauchbar werden.

Die DE-A-24 31 385 beschreibt eine Vorrichtung, bei der nebeneinander zwei Vorfolien hergestellt werden, wobei vor der Streckung in Querrichtung eine Zusammenführung der beiden Folien erfolgt. Bei dieser Methode fehlt jedoch die tragende Funktion der Basisschicht, und es werden häufig Abrisse der Dünnstfolie beobachtet.

Die EP-A-0 153 081 betrifft das Strecken von coextrudierten Verbundfolien, wobei die einzelnen Schichten aus unterschiedlichen Polymeren bestehen, und die Delaminierung des Verbundes nach der Streckung. Dabei lassen sich jedoch die Fließgeschwindigkeiten der unterschiedlichen Kunststoffe in der Praxis nicht genau aufeinander abstimmen. Die Einstellung eines gleichmäßigen Dickenprofils über die Folienbreite bereitet ebenfalls große Probleme, da die Zuordnung der Dickenverteilung von Gesamtfolie und Deckschicht schwierig ist und außerdem die Profileinstellung der unterschiedlichen Schichten bei der Coextrusion ständigen Schwankungen unterworfen ist.

Aufgabe der vorliegenden Erfindung war es daher, ein Verfahren zu schaffen, das es ermöglicht, Folien mit einer Dicke im Bereich von 0,5 bis 3 µm mit zufriedenstellender Laufsicherheit, mit guter Dickengleichmäßigkeit und in guter optischer Qualität (Glanz, Trübung) herzustellen.

Gelöst wird diese Aufgabe durch ein Verfahren mit den Merkmalen des Anspruchs 1.

Als thermoplastische Kunststoffe eignen sich im Rahmen der vorliegenden Erfindung insbesondere synthetische Polymere wie Polyolefine, Polyester, Polyamide, Polysulfone wie Polyarylethersulfon, Polyaryletherketone, Polyphenylensulfid oder Polystyrol. Vorzugsweise eignen sich erfindungsgemäß Polyolefine und Polyester.

Als Polyolefine kommen isotaktisches Polypropylen oder Copolymere mit Propyleneinheiten und andere Alpha-Olefine mit 2 bis 6 C-Atomen in Frage sowie Mischungen von diesen. Isotaktisches Polypropylen mit einem n-heptanlöslichen Anteil von nicht mehr als 10 %, Copolymere von Propylen und Ethylen mit einem Ethylenanteil von 2 bis 10 Gew.-% oder Copolymere von Propylen und Butylen oder 4-Methylpenten mit einem Propylenanteil von mindestens 60 Gew.-% stellen bevorzugte Polyolefine dar.

Unter Polyester sind Homo- und Copolykondensate, Gemische verschiedener Polyester sowie Abmischungen oder Blends von Polyestern mit anderen Polymeren zu verstehen.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylen-dimethylenterephthalat, Polyethylen-2,6-naphthalindicarboxylat oder Polyethylen-p-hydroxy-benzoat.

Die Polyester können bis zu 30 Mol-% aus Comonomereinheiten aufgebaut sein, wobei eine Variation in der Glykol- und/oder der Säurekomponente möglich ist. Als Säurekomponente können die Copolyester u. a. Adipinsäure, Glutarsäure, Bernsteinsäure, Sebazinsäure, Phthalsäure, Isophthalsäure, 5-Na-sulfoisophthalsäure oder polyfunktionelle Säuren wie Trimelitsäure u. a. enthalten.

Die Polyestergemische können aus Polyester-Homopolymeren, Polyester-Copolymeren oder Polyester-Homo- und Copolymeren bestehen. Beispiele hierfür sind Abmischungen von Polyethylenterephthalat/Polybutylenterephthalat, Polyethylenterephthalat/Polyethylenisophthalat oder Polyethylenisophthalat/5-Natriumsulfoisophthalat.

Beispiele für Polymere, die der Polyester enthalten kann, sind Polyolefin-Homo- oder -Copolymere wie Polyethylen, Polypropylen, Poly-4-methylpenten, Ethylen-Vinylacetat-Copolymere, die ihrerseits verseift sein können, Ionomere, Polyamide, Polyacetone, Polycarbonate, Polytetrafluorethylen, Polysulfone u. a.

In bevorzugter Ausführungsform des erfindungsgemäßen Verfahrens wird vorgesehen, daß die Trägerschicht aus Polyolefin und die dünne Deckschicht aus Polyester bestehen.

Die elektrische Coronaentladung wird mittels Sprühelektroden bewerkstelligt, die an einen Hochfrequenzgenerator angeschlossen sind. Zweckmäßig ist eine Spannung von etwa 10 000 V und eine Frequenz von etwa 10 000 Hz. Erfindungsgemäß wird vorzugsweise die Oberfläche der Polyolefinfolie coronabehandelt, wobei die coronabehandelte Oberfläche nach der Behandlung eine Oberflächenspannung von wenigstens 40 mN/m aufweist.

Überraschend hat sich gezeigt, daß sich nach dem vorbeschriebenen Verfahren Dünnstfolien aus Polyester mit Dicken im Bereich von 0,5 bis 3 µm, insbesondere von 1 bis 2 µm, mit sehr guter Laufsicherheit und mit einem hervorragenden Dickenprofil herstellen lassen. Die nach dem erfindungsgemäßen Verfahren hergestellten Dünnstfolien weisen zusätzlich einen sehr hohen Glanz und eine sehr niedrige Trübung auf.

Die Erfindung soll durch das nachfolgende Ausführungsbeispiel im Vergleich mit dem Stand der Technik noch deutlicher veranschaulicht werden, ohne jedoch auf die konkrete Ausführungsform beschränkt zu sein.

In dem Beispiel und in den Vergleichsbeispielen wurden zur Bestimmung der optischen Qualität die Glanz- und Trübungswerte bestimmt.

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20 °C eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt.

### Beispiel

Aus einer Breitschlitzdüse wurde Polyethylenterephthalat extrudiert und auf einer Abzugswalze zu einer Vorfolie von 10,5 µm Dicke abgeschreckt.

Aus einer zweiten Breitschlitzdüse wurde eine Mischung aus 90 Gew.-% Polypropylen und 10 Gew.-% TAFMER XR^{(R)}, einer Mischung aus einem Ethylen-Propylen-Butylen-Terpolymeren und einem Ethylen-Butylen-Copolymeren, extrudiert und auf einer Abzugswalze zu einer Vorfolie mit einer Dicke von 52,5 µm abgeschreckt.

Die Polyolefinfolie wurde dann durch eine elektrische Coronaentladungszone hindurchgeführt (10 000 Hz/10 000 V) und wies nach der Behandlung auf der behandelten Oberfläche eine Oberflächenspannung von 42 mN/m auf.

Beide Folien wurden dann zusammengeführt, wobei die coronabehandelte Oberfläche zwischen den beiden Folienlagen angeordnet war. Danach wurde der Folienverbund bei einer Temperatur von 95 °C mit Hilfe von mit unterschiedlichen Umfangsgeschwindigkeiten angetriebenen Walzen in Längsrichtung um das Dreifache gestreckt, dann in einen Querstreckrahmen eingeführt und bei einer Temperatur von 95 °C um das 3,5fache in Querrichtung gestreckt.

Danach wurde der Folienverbund abgekühlt und delaminiert, wobei eine Polyesterfolie mit einer Dicke von 1 µm entstand und eine Polyolefinfolie mit einer Dicke von 5 µm.

Die Ergebnisse der Vergleichsversuche (Tabelle 1) zeigen die Überlegenheit des erfindungsgemäßen Verfahrens eindrücklich auf.

**Tabelle 1**

| (Vergleich mit dem Stand der Technik) | | | | |
|---|---|---|---|---|
| | DE-A-17 04 764 | DE-A-24 31 385 | EP-A-0 153 081 | erfindungsgemäßes Verfahren |
| Laufsicherheit des Verfahrens * | + | - | + | + |
| Dickengleichmäßigkeit * | + | + | - | + |
| Optische Qualität * | - | + | +- | + |
| Delaminierbarkeit * | - | - | +- | + |

| | | | | |
|---|---|---|---|---|
| * jeweils bezogen auf die Dünnstfolie | | | | |
| + = gut +- = befriedigend - = schlecht | | | | |

## Patentansprüche

1. Verfahren zur Herstellung biaxial gestreckter Folienbahnen aus thermoplastischem Kunststoff mit einer Dicke von Weniger als 3 µm, bei dem Wenigstens Zwei Folienbahnen übereinanderliegend gemeinsam in Längs- und Querrichtung gestreckt werden, wobei eine Trägerschicht und wenigstens eine Deckschicht aus dem thermoplastischen Kunststoff auf jeweils eigenen Abzugswalzen hergestellt werden, wenigstens eine Oberfläche der Trägerschicht oder der Deckschicht mit einer elektrischen Coronaentladung behandelt wird und dann die Trägerschicht und die Deckschicht so zusammengeführt werden, daß die coronabehandelte Oberfläche zwischen den beiden Schichten angeordnet ist, und die Deckschicht, die eine Dicke von weniger als 3 µm hat, nach dem Abkühlen von der Trägerschicht delaminiert wird.

2. Verfahren nach Anspruch 1, wobei eine dünne Deckschicht aus Polyester auf eine Trägerschicht aus Polyolefin aufgebracht wird.

3. Verfahren nach Anspruch 1 oder 2, wobei die elektrische Coronaentladung mittels Sprühelektroden bewerkstelligt wird, die an einen Hochfrequenzgenerator angeschlossen sind, wobei die Behandlung so durchgeführt wird, daß die coronabehandelte Oberfläche nach der Behandlung eine Oberflächenspannung von wenigstens 40 mN/m aufweist.

4. Verfahren nach einem der Ansprüche 1 bis 3, wobei Dünnstfolien aus Polyester mit Dicken im Bereich von 0,5 bis 3 µm, insbesondere von 1 bis 2 µm, hergestellt werden.

## Claims

1. A process for the production of webs of biaxially stretched film of thermoplastic material having a thickness of less than 3 µm, in which at least two superimposed film webs are jointly stretched in the longitudinal and transverse directions, in which process one base layer and at least one coating layer comprised of the thermoplastic material are produced on individual takeoff rolls, at least one surface of either the base layer or the coating layer is treated with an electric corona discharge, and subsequently the base layer and the coating layer are joined such that the corona-treated surface is placed between the two layers, and the coating layer, having a thickness of less than 3 µm, is removed from the base layer by delamination following cooling down.

2. The process as claimed in claim 1, where a thin coating layer of polyester is applied to a polyolefin base layer.

3. The process as claimed in claim 1 or 2, where the electric corona discharge is effected by means of sparking electrodes connected to a high frequency generator and the treatment is performed such that the corona-treated surface has a surface tension of at least 40 mN/m following the treatment.

4. The process as claimed in any of claims 1 to 3, where ultra-thin polyester films having thicknesses in a range of 0.5 to 3µm, particularly of 1 to 2 µm, are produced.

## Revendications

1. Procédé pour la fabrication de bandes continues de pellicules étirées biaxialement, à base de matière synthétique thermoplastique, ayant une épaisseur de moins de 3 µm, dans lequel au moins deux bandes continues de pellicules sont étirées conjointement en étant superposées, dans le sens longitudinal et dans le sens transversal, une couche de support et au moins une couche de recouvrement à base de la matière synthétique thermoplastique étant produites chacune sur son propre cylindre récepteur, au moins une surface de la couche de support ou de la couche de recouvrement étant traitée par une décharge électrique à effet couronne, et la couche de support et la couche de recouvrement étant ensuite réunies, de manière que la face traité par effet couronne soit disposée entre les deux couches, et la couche de recouvrement, ayant une épaisseur de moins de 3 µm, étant séparée de la couche de support par délaminage, après le refroidissement.

2. Procédé selon la revendication 1, dans lequel une mince couche de recouvrement en polyester est appliquée sur une couche de support en polyoléfine.

3. Procédé selon la revendication 1 ou 2, dans lequel la décharge électrique à effet couronne est effectuée au moyen d'électrodes d'émission qui sont raccordées à un générateur haute fréquence, le traitement étant effectué de manière que la surface traitée par effet couronne présente après le traitement une tension superficielle d'au moins 40 mN/m.

4. Procédé selon l'une des revendications 1 à 3, dans lequel on fabrique de très minces pellicules à base de polyester, ayant des épaisseurs dans la plage allant de 0,5 à 3 µm, en particulier de 1 à 2 µm.
